# EUROPEAN PATENT APPLICATION

(11) **EP 1 935 254 A1**
(43) Date of publication of application: **25.06.2008**
(21) Application number: 06077314.0
(22) Date of filing: 22.12.2006
(51) Int. Cl.: A23L 1/00, A23L 1/01, A23L 1/05, A23L 1/31, A23L 1/315, A23L 1/325

(54) **Coating for microwavable food product**

(71) Applicant: Nederlandse Organisatie voor toegepast- natuurwetenschappelijk onderzoek TNO, 2628 VK Delft (NL)
(72) Inventor: Noort, Martijn Willem-Jan, 1221 BW Hilversum (NL); Jurgens, Albertus, 3461 GJ Linschoten (NL); Verkleij, Theodorus Jozef, 2871 KX Schoonhoven (NL)
(74) Representative: van Loon, C.J.J.

(57) **Abstract**

The invention relates to an aqueous composition for preparing an edible coating on a microwavable food, which composition comprises at least one prolamin and at least one hydrocolloid or gelling agent. The invention further relates to a microwavable food comprising an edible coating, which coating comprises at least one prolamin and at least one hydrocolloid or gelling agent.

## Description

The invention relates to a composition for the preparation of a food, in particular a coated convenience food product

Often, convenience food products are coated to give them a crispy, crunchy sensation.

Many of those products are complex and composed of a soft core, containing a high amount of moisture, while the hard, crispy coating has a low moisture content.

Modern households have a microwave system available for rapid heating and preparation of convenience food.

However, the nature of microwave heat transfer is such that it is a challenge to prepare complex foods with a crispy texture. In the microwave, relatively much heat is generated in the product core. This causes moisture to migrate from the inside towards the crispy coating. This migration added to the moisture already present, causes the coating to become soggy. Moreover, when a coating contains free water, the temperature of the coating will hardly exceed that of the boiling point of water. As a result insufficient amounts of moisture are evaporated from the coating to restore crispiness, so the crust of the end product stays soft and soggy.

To solve this problem susceptor containing packages have been developed. The function of the susceptor is to convert microwave energy into heat. As a result, the susceptor containing package functions as an external source of heat for the product and thus converts the microwave heating mechanism into one comparable to a conventional oven. External susceptor containing packages for snacks are expensive and it is much more convenient to be able to reheat products without additional provisions

WO 94/00029 describes an edible microwave susceptor composition comprising fat, a microwave absorbing polyhydric alcohol, an emulsifier and a microwave absorbing inorganic material. The composition is preferably free of water, amino acids (including proteins) and reducing sugars. The presence of fat (up to 97 %) may be undesirable from a dietary point of view. Also emulsifiers may be undesirable, as they are considered to be additives by the public.

WO 93/03634 describes a coating in which the composition of the pre-dust is the claim of the invention. The described a pre-dust composition consist of a starch and a *per se* gelable cellulose gum powder. The starch preferably is a high amylose starch. The type of used predust must always be adapted to the substrate. Amylose starch is hydrophilic, so moisture will be absorbed by the predust.

WO 2001/008513 describes a pre-dust which increases the uptake and adhesion of the batter. The composition, which retards moisture migration from the substrate to the outer crumb, can be described as a hydrophilic medium.

According to WO 05/79586 batters based on flours, starches or the like have a tendency to become soggy or tough and chewy after microwaving and/or oven baking of frozen coated foods. It describes dry batter compositions comprising at least one component selected from insoluble vegetable protein and insoluble dietary fibres.

It is an object of the present invention to provide a novel composition that may be used as a coating composition for food.

It is a further objection to provide a composition suitable to provide an edible moisture-barrier coating on a microwavable food

It is a further object to provide a composition for providing a crisp coating on food product to be reheated in a microwave oven before consumption. It is in particular an object to provide such composition without needing an external susceptor package.

It is a further object to provide a novel coated food of which the coating is crispy after (re)heating the food by subjecting the food to microwave radiation.

One or more other objects which may be solved in accordance with the invention are apparent from the remainder of the description and/or the claims.

It has now surprisingly been found that it is possible to provide an aqueous composition comprising a specific hydrophobic protein and a gelling agent, which may be a hydrocolloid, which composition is suitable to prepare an edible coating on a microwavable food.

Accordingly, the present invention relates to an aqueous composition for preparing an edible coating on a microwavable food, which composition comprises at least one prolamin and at least one hydrocolloid or a gelling agent. The composition usually is an aqueous dispersion.

The invention further relates to a microwavable food comprising an edible coating, which coating comprises at least one prolamin and at least one hydrocolloid or a gelling agent.

The food may in particular be a food having a moisture content of at least about 50 wt. %, more in particular 50-85 wt. %, based on the total weight of the food.

The food may in particular be selected from meat products, such as a poultry meat products, fish products, vegetarian coated food products, microwavable snacks, such as nuggets, hamburgers, schnitzels, fillets.

In particular, the food may be a food which is frozen, prior to consumption.

It has been surprisingly been found possible to disperse a prolamin in water or an aqueous solution, in the presence of a hydrocolloid or a gelling agent.

The aqueous composition has good rheological properties for applying the composition as a batter to a food product. The battered food product is heated. The batter transformed into a coating (a dry layer on a surface of the product) by losing its moisture and the composition comprising the prolamin and hydrocolloid or gelling agent becomes fixed and is effective in acting as a moisture repellent.

It has been found that the coating in particular is capable of acting as a moisture barrier, such that excessive uptake of water by the coating is avoided, also if the food is prepared by subjecting the food to microwave radiation.

A coating on a food of the invention is capable of at least partially inhibiting uptake of water by the coating from the core during storage of the food (e.g. in a refrigerator or deep-freezer), during preparing the food for consumption - in particular by microwave heating - and/or after it has been made ready to be served until consumption.

The composition of the invention has been found to adhere well to a food that is coated with the composition, also to a hydrophilic, moisture containing food, such as a meat product or the like.

Also, it has been found that the coating allows evaporation of some moisture through the coating, during (re)heating, which is advantageous because this allows to substantially prevent blow off. Blow off is a phenomenon wherein large air pockets are formed between the coating and the core of the product. Eventually large cracks may be formed or part of the coating may fall of from the core. Blow off is a result of a build up of vapour pressure when the vapour is not allowed to escape through the coating. The possibility of evaporation results in insufficient water vapour pressure build up resulting in avoiding blow off.

It is noted that the use of prolamins in moisture barrier coatings for moist foods is known from WO 2003/024253. The coating compositions described in this publication are based on alcohol and require the presence of a lipid and a salt of a fatty acid. Aqueous compositions nor the use of the composition for preparing a coating on a micro-waveable food are suggested.

It is an advantage of the invention that it allows the use of an aqueous based coating composition, for reasons of cost price and/or health hazards (such as exposure of the environment to alcohol) . Further, the food coated with an aqueous composition of the invention may be safely heated without needing to remove the solvent prior to heating, as may be needed in case a conventional coating composition comprising an organic solvent, is used. The composition of the invention may be essentially free of lipids and/or salts of fatty acids, which is advantageous from a dietary point of view.

The gelling agents, are water-gellable compounds. It may in particular be chosen from gel forming proteins - such as casein or caseinate - and hydrocolloids, such as (modified) pregelatinized starches.

In principle, the starch may be obtained from any plant, in particular from any root, tuber or cereal. Examples of suitable sources for the starch in particular include potato starch and maize starch. The starch may have a normal amylopectin/amylose ratio, it may be rich in amylopectin or it may be rich in amylose.

Suitably, the starch is modified, chemically, physically and/or enzymatically. In particular, the starch may be selected from the group of crosslinked starch, acetylated starch starches. In particular, good results have been achieved with a starch that has been crosslinked with adipate and acetylated.

The hydrocolloid or gelling agent concentration in the composition respectively the coating of the food is usually at least 2 wt.% based on dry weight. For further improved dispersibility of the prolamine the concentration preferably is at least 5 wt. %. The hydrocolloid or gelling agent concentration is usually up to 50 wt. % based on dry weight.
Prolamins are a class of proteins having a high proline content and are found in the seeds of *e.g.* wheat, rye, maize, and barley. Prolamins are insolluble in water, but typically dissolve in aqueous alcohol (e.g. 70 % ethanol).

In particular the prolamin may be selected from the group consisting of zeins, hordeins, avenines, gliadins, kafirins and combinations thereof. Other suitable prolamins include those proteins having a similar or higher proline and/or glutamine content and/or having a similar or better solubility in an aqueous ethanol solvent, in particular 70% ethanol, and/or having a similar hydrophobicity.

Usually the composition respectively the coating comprises at least 5 wt. %, in particular at least 10 wt. % prolamin, based on dry weight. The concentration is usually up to 85 wt. % based on dry weight, preferably up to 50 wt. %.

The invention further relates to a method for making a composition according to the invention, comprising mixing water, the hydrocolloid or gelling agent and the prolamin at a temperature in the range of 45°C to 80 °C. The dispersing of the prolamin has been found particularly effective in case the temperature is at least 60°C. The mixing is preferably carried out at a temperature of 65 °C or less. The temperature preferably is 65 °C or less, to avoid denaturation and/or loss of functionality of the prolamine.

At least initially the water content may be relatively low, such as 5 to 15 wt. % based on the total weight of the mixture.

In an embodiment the prolamine is first dry mixed with the hydrocolloid or gelling agent and thereafter water is gradually added, whilst preferably kneading the mixture.

In another embodiment the hydrocolloid or gelling agent is mixed with water to form a gel and thereafter the gel is (gradually) added to prolamine, whilst kneading the mixture of prolamine and the gel. In this embodiment, the prolamine is usually first brought into a solution with a suitable organic solvent, such as an aqueous alcohol , in particular aqueous ethanol. After mixing the prolamine with the gel, the organic solvent may be removed, e.g. by evaporation.

If desired, water or an aqueous solution may be added to the mixture at a later stage, e.g. shortly before applying the composition to a food, and then additionally mixed to provide an aqueous batter having a viscosity that is convenient to coat a food. The skilled person will be able to determine a suitable viscosity depending on the type of product and the presence or addition of one or more other ingredients, such as bread crumbs.

The invention further relates to a method for manufacturing a coated food according to the invention, wherein the food is coated with composition according to the invention, and the coated food is pre-heated, preferably by deep frying (in fat) or by hot air (such as in a hot air oven).

If desired, the coating may be provided with breadcrumbs or the like prior to pre-heating.

After preheating, the food is in general cooled or frozen, packaged and/or stored cooled or frozen, prior to use.

The invention further relates to a method for preparing a food, comprising heating a food according to the invention by microwaving the food, normally until it is ready to be served.

The invention further relates to the use of a composition according to the invention to provide a crispy coating on a heated food product, in particular a food product heated by microwaving.

The invention further relates to the use of a composition according to the invention as a moisture barrier coating on a heated food product, in particular a food product heated by microwaving.

The invention further relates to the use of a hydrocolloid or gelling agent as defined herein for dispersing a prolamine in water or an aqueous liquid.

The invention is now illustrated by the following examples.

### Examples

### Coating preparation

### Reference coating

As a reference a commercial batter formulation was used. This batter was prepared by adding 150 grams of water to 100 grams of standard batter powder (see table 2.1). Using a whisk a homogeneous batter was made and left for 10 minutes before application.

**Table 1 Formulation of reference batter**

| Ingredient | Amount (g) |
|---|---|
| Batter powder BPB070 | 100 |
| Water | 150 |

### Prolamin coating

It appeared that prolamin could be stabilized in a hydrophilic environment by combining prolamin with a functional component. Therefore, prolamin was combined with a modified starch (cold swelling, acetylated, cross-linked waxy maize starch).

**Table 2: Formulations of prolamin coating, the water% is the final water content to obtain the desired batter viscosity.**

| | Coating |
|---|---|
| Prolamin | 25 g |
| Modified starch | 25 g |
| Water% | 85.6% |

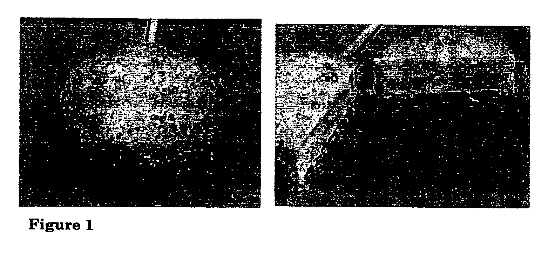

The modified starch produced a very nice batter, having a very homogeneous appearance. During frying the layer showed very good adhesion and no blow-off occurred as can be seen in Figure 1a and 1b.

### Prolamin coatings

Prolamin batter coatings were mixed in a Brabender docorder z-blade mixer. The mixer is equipped with a recorder giving the mixing torque during mixing. The recorded "mixing curve" provides information on the consistency of the material during mixing. The mixing head is temperature controlled using a water bath.

### Preparing meat cores

In this experiment the meat core of the model snacks was a pasteurized chicken meat disk with a diameter of 40 mm and a thickness of 10 mm. Main features of this core were its homogeneous structure and composition.

Meat from chicken drum sticks was mixed with 10 % water, 1.2 % NaCl and 0.3% Latuw phosphate (a blend of di- and poly-phosphates). This mass was cut down to small particles with a vacuum bold chopper and further reduced in a vacuum atmosphere. After becoming a homogenous substance the mass was filled in a nylon casing with a calibre of 50 mm. These 'sausages' were pasteurized in water of 85 - 87 °C to reach a product-core temperature of 81°C. Contiguously, the products were cooled with water to a temperature of approximately 10°C and stored in an air-cooled room of 0-2°C.

From these sausages, slices of 10 mm thickness were cut - with a meat slicer, type Berkel, model 834 at position of the knife on 26. From these slices a disk of 40 mm diameter were cut using a sharp round cutter.

### Preparing model snacks

Meat cores were placed on a cocktail stick and dusted with egg-white powder for improved adhesion. Subsequently, the meat samples were dipped in the batter, and excess batter was removed by gentle tapping. The meat was then turned through breadcrumbs, ensuring an even distribution of crumbs on all sides. The batters developed as a combination of prolamin and hydrocolloid could be fried directly after battering.

The samples were deep fat fried, three at a time, at 180°C and allowed to cool for 10 minutes. In first experiments frying time was 90 seconds. At a later stage in the project this was extended to 180 seconds. After cooling samples were placed unpacked into a blast chiller (-40°C) for 1 hour. On removal from the chiller they were packed in plastic bags and stored in the deep freezer (-20°C) for a minimum of 7 days.

### Microwave reheating

Microwave reheating was done in an 850W house hold microwave oven (LG type MC-8044A). The microwave was preconditioned before each measurement by heating a glass 600 ml beaker with 500 ml ice water for 60 seconds on full power. The resulting temperature of the water should be around 20°C.

At 60 seconds after pre-conditioning the reheating of samples was started. Model products and / or commercial chicken nuggets (all at -20°C) were placed onto the roaster-stand, eight products in total each time, and heated for a defined time on full power. On removal from the microwave the core temperature of the samples was measured (target minimum 70°C).

### Sensory evaluation

Five minutes after microwave reheating the crispness of the products was evaluated. This was done by an expert panel of 3 or more persons, who described the sensory characteristics of the batter and breading individually and reached consensus on the final description and quality.

The main characteristics were the crispiness, hardness or toughness of the bread crumbs. The batter layer was described from dry to tough, soft or soggy.

The products prepared with promising looking batters were frozen, stored and tested sensorial. After 1 week of frozen storage the products were microwave reheated.

**Table 3. Properties of batter and breading layer after microwave reheat; sensory description.**

| Coating | Sensory description |
|---|---|
| Reference | Soft, soggy, not crispy |
| Prolamin/Modified | Hard, somewhat |
| starch | crispy |

The functionality of the coating prepared in accordance with the invention is better than the reference coating. From the perspective of process ability as well as functionality, the coating based on prolamin with the modified starch appeared to be promising.

### Ethanol as co-solvent

It was noted that different batches of prolamin showed different affinity with water reflected in different quality of the dispersions. In the following experiment ethanol was used as co-solvent or as pre-solvent. With pre-solvent is meant that the prolamin is first dissolved in a minimum amount of ethanol and subsequently diluted with water or a water / starch mixture to obtain batter like consistency.

Three routes were followed to test these options using industrial prolamin and modified starch to develop:
1. prolamin in ethanol (70%), than dilute with water
2. prolamin in ethanol (70%), dilute with starch and water (prolamin:starch=1:1)
3. prolamin and starch in ethanol (70%), dilute with water (prolamin:starch=1:1)

**Table 4 Composition of reduced ethanol batter.**

| | | |
|---|---|---|
| Prolamine | 25 | g |
| Modified starch | 25 | g |
| water | 57 | g |
| Ethanol | 12,5 | g |

The first route, dilution with water, resulted in a small amount of water being absorbed in the prolamin phase.

In the second test a paste composed of the starch with the water was prepared and added to the developed prolamin/ethanol mixture. The - suspension could be further diluted to a batter of desired viscosity.

In the third test a dry premix of prolamin and starch was mixed with ethanol (70%) and diluted with water. In this case a gritty matrix developed in which it seemed as if the starch interacted with the ethanol.

As the second route provided a nice coating, snack products were made with this coating and compared with the water based prolamin coating and the commercial reference coating.

The results of the sensory evaluation of these products after 1 week of frozen storage and microwave reheat are presented in table 5. As can be seen the results show a substantial improvement of the crispness when the prolamin was first solved in ethanol.

**Table 5: Results of sensory evaluation of snacks after microwave reheat.**

| Sample | Core T | Sensory batter | bread crumbs | Score |
|---|---|---|---|---|
| | | | hard little | |
| Reference 1 | 78°C | soft soggy tough | crisp | (-) |
| Reference 2 | 82°C | soft little soggy | hard crispy | (+-) |
| Prolamin modified starch water (1) | 75°C | soft short bite | crispy | (+) |
| Prolamin EtOH preg (2) | 77°C | soft short bite | very crispy | (+++) |

## Claims

1. An aqueous composition for preparing an edible coating on a microwavable food, which composition comprises at least one prolamin and at least one hydrocolloid or (other) gelling agent.

2. Microwavable food - in particular a meat product, such as a poultry meat product, a fish product, a vegetarian food product or a microwavable snack - comprising an edible coating, which coating comprises at least one prolamin and at least one hydrocolloid (other) gelling agent.

3. Composition or food according to any of the preceding claims, wherein the hydrocolloid or (other) gelling agent is selected from starches that are dispersable and gellable in water and water-gellable proteins.

4. Composition or food according to claim 3, wherein the starch is selected from crosslinked starch, acetylated starch and pregelatinised starches, preferably a adipate crosslinked starch.

5. Composition or food according to any of the preceding claims, wherein the composition respectively the coating of the food comprises 2 to 50 wt. % hydrocolloid or gelling agent, based on dry weight, preferably 5 to 25 wt. %

6. Composition or food according to any of the preceding claims, wherein the prolamin is selected from the group consisting of zeins, hordeins, avenines, gliadins, kafirins and combinations thereof.

7. Composition or food according to any of the preceding claims, wherein the composition respectively the coating comprises 5 to 98 wt. % prolamin, based on dry weight, preferably 5 to 50 wt. %.

8. Composition according to any of the preceding claims, wherein the composition is an aqueous dispersion.

9. Method for making a composition according to any of the preceding claims, comprising mixing water, the hydrocolloid or gelling agent and the prolamin at a temperature in the range of 45 to 80 °C , preferably in the range of 60 to 65 °C.

10. Method according to claim 9, wherein the ratio water to the sum of prolamine and hydrocolloid or gelling agent is in the range of 4:1 to 1:4,

11. Method according to claims 9 or 10 wherein, after a first mixing step is further diluted with water or an aqueous solution, and then additionally mixed to provide an aqueous batter.

12. Method for making a coated food according to claim 2, wherein the food is coated with composition according to any of the claims 1 or 3-8, and the coated food is pre-heated, preferably by deep frying or in an oven.

13. Method according to claim 12, wherein the pre-heated food is cooled or frozen, and packaged, and if desired stored, cooled and/or frozen prior to use.

14. Method for preparing a food, comprising heating a food according to any of the claims 2-8 by microwaving the food.

15. Use of a composition according to any of the claims 1 or 3-8 to provide a crispy coating on a heated food product, in particular a food product heated by microwaving.

16. Use of a composition according to any of the claims 1 or 3-8 as a moisture barrier coating on a heated food product, in particular a food product heated by microwaving.

17. Use of a hydrolloid or (other) gelling agent as defined in any of the claims 1 or 3-8 for dispersing a prolamine in water or an aqueous liquid.
